# EUROPEAN PATENT APPLICATION

(11) **EP 4 353 797 A1**
(43) Date of publication of application: **17.04.2024**
(21) Application number: 22820149.7
(22) Date of filing: 03.06.2022
(51) Int. Cl.: C09J 175/06, B32B 9/00, B32B 27/00, C09J 7/32

(54) **ADHESIVE AND LAMINATE**

(30) Priority: 11.06.2021 JP 2021097987
(71) Applicant: MITSUI CHEMICALS, INC., Tokyo 104-0028 (JP)
(72) Inventor: SHIMOKAWATOKO, Yoshiki, Sodegaura-shi, Chiba 299-0265 (JP); SASANO, Shigetoshi, Sodegaura-shi, Chiba 299-0265 (JP); TERADA, Hideki, Sodegaura-shi, Chiba 299-0265 (JP); MIYANAGA, Tomoharu, Omuta-shi, Fukuoka 836-8610 (JP); NAKAJIMA, Tsuyoshi, Sodegaura-shi, Chiba 299-0265 (JP)
(74) Representative: Hoffmann Eitle
(86) International application number: PCT/JP2022/022590
(87) International publication number: WO 2022/259968

(57) **Abstract**

Provided is an adhesive containing an isocyanate group-terminated prepolymer. The isocyanate group-terminated prepolymer contains a reaction product of a polyisocyanate component containing xylylene diisocyanate and a polyol component containing a polyester polyol and a low molecular weight diol. The isocyanate group-terminated prepolymer has a skeleton represented by a structural formula (A). The content ratio of the skeleton represented by the structural formula (A) is 40% by mass or more relative to the total amount of the isocyanate group-terminated prepolymer. 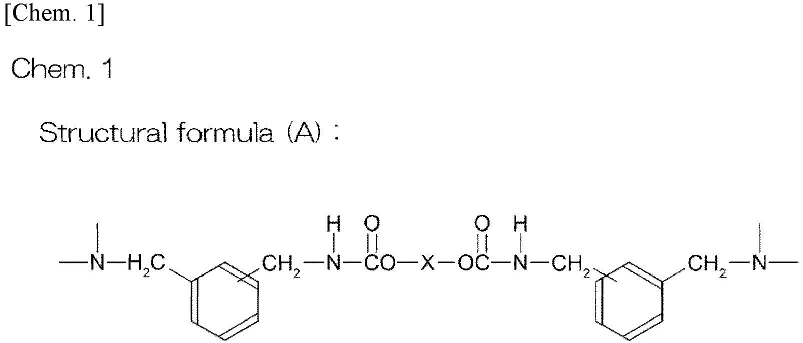 (where X represents a low molecular weight diol residue.)

## Description

### TECHNICAL FIELD

The present invention relates to an adhesive and a laminate.

### BACKGROUND ART

In the field of packaging materials, a laminate in which a plastic film and a gas barrier layer are laminated has been known. As the gas barrier layer, for example, a metal deposition layer in which a metal layer and/or a metal oxide are deposited on a plastic film has been known. In recent years, polyurethane layers have been proposed as gas barrier layers. It has also been proposed to laminate a polyurethane layer with a metal deposition layer.

More specifically, the following laminate is known, for example. That is, the laminate includes a film and a gas barrier layer. The gas barrier layer contains a cured product of a gas barrier polyurethane resin composition. The gas barrier polyurethane resin composition includes agents A and B. The agent A contains a TMP adduct of XDI. The agent B contains ethylene glycol and ethanol.

Further, a film including a metal deposition layer is used as the film (see, for example, Patent Document 1 (Example 13)).

In the above-described laminate, the gas barrier layer has excellent gas barrier properties and adhesion.

### Citation List

### Patent Document

Patent Document 1: Japanese Unexamined Patent Publication No. 2021-24986

### SUMMARY OF THE INVENTION

### PROBLEM TO BE SOLVED BY THE INVENTION

On the other hand, the gas barrier polyurethane resin composition further requires adhesion (initial tack) immediately after application.

The present invention provides an adhesive and a laminate that have excellent gas barrier properties and adherence and in addition, have excellent initial tack.

### MEANS FOR SOLVING THE PROBLEM

The present invention [1] includes an adhesive including an isocyanate group-terminated prepolymer, the isocyanate group-terminated prepolymer containing a reaction product of a polyisocyanate component containing xylylene diisocyanate and a polyol component containing a polyester polyol and a low molecular weight diol, in which the isocyanate group-terminated prepolymer has a skeleton represented by a structural formula (A), and a content ratio of the skeleton represented by the structural formula (A) is 40% by mass or more relative to a total amount of the isocyanate group-terminated prepolymer. 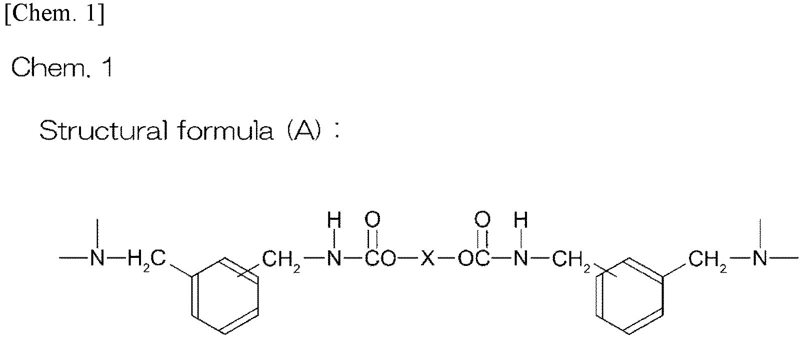 (where X represents a low molecular weight diol residue.)

The present invention [2] includes the adhesive described in [1], in which the low molecular weight diol contains ethylene glycol and/or propylene glycol.

The present invention [3] includes the adhesive described in [1] or [2], in which the polyester polyol has a number average molecular weight of 400 or more and 2000 or less.

The present invention [4] includes the adhesive described in any one of the above-described [1] to [3], being a moisture-curable adhesive.

The present invention [5] includes the adhesive described in any one of the above-described [1] to [3], being a two-component curable adhesive, which contains a first component containing the isocyanate group-terminated prepolymer and a second component containing a low molecular weight polyol.

The present invention [6] includes the adhesive described in [5], in which the content ratio of the skeleton represented by the structural formula (A) is 50% by mass or more relative to a total amount of a cured product of the two-component curable adhesive.

The present invention [7] includes a laminate including a substrate; an adhesive layer disposed on the substrate; and an inorganic thin film disposed on the adhesive layer, in which the adhesive layer is a cured product of the adhesive described in any one of the above-described [1] to [6].

The present invention [8] includes an adhesive being a two-component curable adhesive, which contains a first component containing an isocyanate group-terminated prepolymer and a second component containing a low molecular weight polyol, the isocyanate group-terminated prepolymer containing a reaction product of a polyisocyanate component containing xylylene diisocyanate and a polyol component containing a polyester polyol and a low molecular weight diol, in which the isocyanate group-terminated prepolymer has a skeleton represented by a structural formula (A), and a content ratio of the skeleton represented by the structural formula (A) is 50% by mass or more relative to a total amount of a cured product of the two-component curable adhesive. 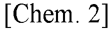 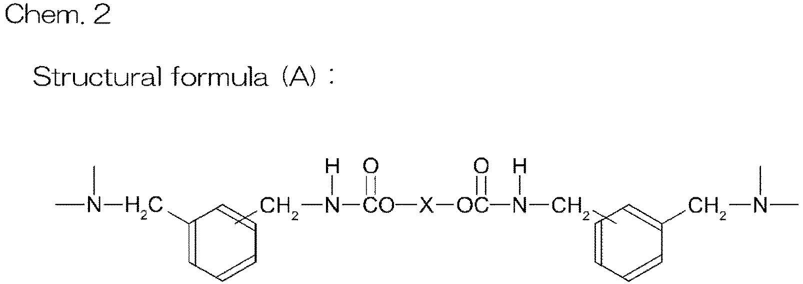 (where X represents a low molecular weight diol residue.)

### EFFECTS OF THE INVENTION

The adhesive of the present invention contains an isocyanate group-terminated prepolymer. The isocyanate group-terminated prepolymer then contains a reaction product of a polyisocyanate component containing xylylene diisocyanate and a polyol component containing a polyester polyol and a low molecular weight diol. Therefore, the adhesive of the present invention has excellent initial tack. Furthermore, the adhesive of the present invention contains the skeleton represented by the above-described structural formula (A) in the isocyanate group-terminated prepolymer at a ratio of the predetermined value or more. Therefore, the adhesive of the present invention has excellent gas barrier properties and adherence.

The adhesive of the present invention contains the skeleton represented by the above-described structural formula (A) at a ratio of the predetermined value or more relative to the total amount of the cured product of the two-component curable adhesive. Therefore, the adhesive of the present invention has excellent gas barrier properties and adherence.

The laminate of the present invention includes an adhesive layer that is a cured product of the above-described adhesive. An inorganic thin film is disposed on the adhesive layer. Therefore, the laminate of the present invention is excellent in initial tack, gas barrier properties, and adherence of the adhesive layer.

### BRIEF DESCRIPTION OF THE DRAWING

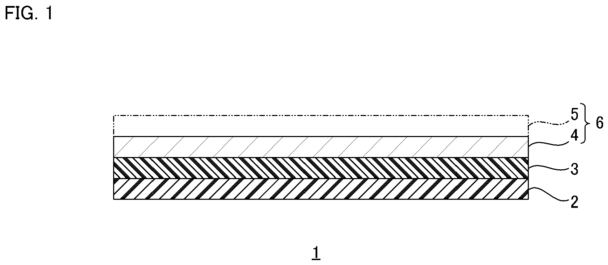

FIG. 1 is a schematic configuration diagram of a laminated film as an embodiment of a laminate of the present invention.

### DESCRIPTION OF THE EMBODIMENTS

As the details are described later, the adhesive of the present invention is either a two-component curable adhesive or a moisture-curable (one-component curable) adhesive. The adhesive contains an isocyanate group-terminated prepolymer as an essential component.

The isocyanate group-terminated prepolymer contains a reaction product of a polyisocyanate component and a polyol component. Preferably, the isocyanate group-terminated prepolymer is a reaction product of a polyisocyanate component and a polyol component.

The polyisocyanate component contains xylylene diisocyanate as an essential component. Examples of the xylylene diisocyanate include 1,2-xylylene diisocyanate (o-XDI), 1,3-xylylene diisocyanate (m-XDI), and 1,4-xylylene diisocyanate (p-XDI). These can be used alone or in combination of two or more. Preferably, 1,3-xylylene diisocyanate is used.

The xylylene diisocyanate may be a modified product without inhibiting the excellent effect of the present invention. Examples of the modified product include uretdione-modified product, isocyanurate-modified product, iminooxadiazinedione, biuret-modified product, allophanate-modified product, polyol adduct, oxadiazinetrione-modified product, and carbodiimide-modified product.

The polyisocyanate component can contain other isocyanates as optional components. Other isocyanates are isocyanates except xylylene diisocyanate.

Examples of the other isocyanates include aliphatic polyisocyanate, alicyclic polyisocyanate, aromatic polyisocyanate, and araliphatic polyisocyanate (except xylylene diisocyanate). Examples of the aliphatic polyisocyanate include trimethylene diisocyanate, tetramethylene diisocyanate, pentamethylene diisocyanate (PDI), hexamethylene diisocyanate (HDI), 1,2-propane diisocyanate, 1,2-butane diisocyanate, 2,3-butane diisocyanate, 1,3-butane diisocyanate, 2,4,4-trimethylhexamethylene diisocyanate, 2,2,4-trimethylhexamethylene diisocyanate, and 2,6-diisocyanatemethyl caproate. Examples of the alicyclic polyisocyanate include isophorone diisocyanate (IPDI), norbornene diisocyanate (NBDI), methylene bis(cyclohexyl isocyanate) (H₁₂MDI), and bis(isocyanatomethyl)cyclohexane (HeXDI).

Examples of the aromatic polyisocyanate include tolylene diisocyanate (TDI), diphenylmethane diisocyanate (MDI), toluidine diisocyanate (TODI), paraphenylene diisocyanate, and naphthalene diisocyanate (NDI). Examples of the araliphatic polyisocyanate include tetramethylxylylene diisocyanate (TMXDI). Other polyisocyanates may be the above-described modified products without inhibiting the excellent effect of the present invention. These can be used alone or in combination of two or more.

The content ratio of other polyisocyanates is, for example, 50% by mass or less, preferably 30% by mass or less, more preferably 10% by mass or less, particularly preferably 0% by mass relative to the total amount of the polyisocyanate component. The content ratio of the xylylene diisocyanate is, for example, 50% by mass or more, preferably 70% by mass or more, more preferably 90% by mass or more, particularly preferably 100% by mass relative to the total amount of the polyisocyanate component. That is, the polyisocyanate component particularly preferably consists of xylylene diisocyanate.

The polyol component contains a macropolyol and a low molecular weight polyol. Preferably, the polyol component consists of a macropolyol and a low molecular weight polyol.

The macropolyol is an organic compound having two or more hydroxy groups in a molecule and having a relatively high molecular weight. The term "relatively high molecular weight" means that the number average molecular weight is 400 or higher.

The macropolyol contains a polyester polyol as an essential component.

Examples of the polyester polyol include a polycondensate produced by allowing polyhydric alcohol to react with polybasic acid under known conditions.

An example of the polyhydric alcohol include a low molecular weight polyol to be described later. To be more specific, examples of the polyhydric alcohol include dihydric alcohols to be described later, trihydric alcohols to be described later, and tetra- or higher hydric alcohols to be described later. These can be used alone or in combination of two or more. In view of initial tack, preferably, dihydric alcohol is used, more preferably, ethylene glycol, diethylene glycol, 1,3-butanediol, and neopentyl glycol are used, and in view of initial tack, particularly preferably, diethylene glycol, butanediol, and neopentyl glycol are used.

Examples of polybasic acid include saturated aliphatic dicarboxylic acids, unsaturated aliphatic dicarboxylic acids, aromatic dicarboxylic acids, alicyclic dicarboxylic acids, other carboxylic acids, acid anhydrides, and acid halides. Examples of the saturated aliphatic dicarboxylic acid include oxalic acid, malonic acid, succinic acid, methylsuccinic acid, glutaric acid, adipic acid, 1,1-dimethyl-1,3-dicarboxypropane, 3-methyl-3-ethyl glutaric acid, azelaic acid, and sebacic acid. Examples of the unsaturated aliphatic dicarboxylic acid include maleic acid, fumaric acid, and itaconic acid. Examples of the aromatic dicarboxylic acid include orthophthalic acid, isophthalic acid, terephthalic acid, toluene dicarboxylic acid, and naphthalene dicarboxylic acid. Examples of the alicyclic dicarboxylic acid include hexahydrophthalic acid. Examples of the other carboxylic acid include dimer acid, hydrogenated dimer acid, and HET acid. Examples of the acid anhydride include oxalic anhydrides, succinic anhydrides, maleic anhydrides, phthalic anhydrides, alkyl succinic anhydrides, tetrahydrophthalic anhydrides, and trimellitic anhydrides. Examples of the acid halide include oxalyl dichlorides, adipic acid dichlorides, and sebacic acid dichlorides. These can be used alone or in combination of two or more. In view of initial tack, preferably, saturated aliphatic dicarboxylic acid and aromatic dicarboxylic acid are used, more preferably adipic acid and isophthalic acid are used.

Examples of the polyester polyol include plant-derived polyester polyols. To be specific, the plant-derived polyester polyols are produced by condensation reaction of hydroxycarboxylic acid such as hydroxyl group-containing vegetable oil fatty acid using polyhydric alcohol as an initiator under known conditions.

Examples of the polyester polyol include lactone-based polyester polyols. The lactone-based polyester polyols are produced, for example, by ring-opening polymerization of lactones using polyhydric alcohol as an initiator. Examples of lactones include ε-caprolactone and γ-valerolactone. To be more specific, examples of the lactone-based polyester polyol include polycaprolactone polyols and polyvalerolactone polyols. Examples of the polyester polyol include alcohol-modified lactone-based polyester polyols obtained by copolymerizing the lactone-based polyester polyol with the above-described dihydric alcohol.

These polyester polyols can be used alone or in combination of two or more. For the polyester polyol, preferably, a polycondensate of polyhydric alcohol and polybasic acid is used.

The polyester polyol has a number average molecular weight of, for example, 400 or more, preferably 500 or more. The number average molecular weight of the polyester polyol is, for example, 20000 or less, preferably 10000 or less, more preferably 5000 or less, further preferably 2000 or less, further preferably 1000 or less, particularly preferably 800 or less. When the number average molecular weight of the polyester polyol is within the above-described range, an adhesive having excellent gas barrier properties, adherence, and initial tack can be produced.

The polyester polyol has an average number of hydroxyl groups of, for example, 1.8 or more, preferably 2 or more. Further, the average number of hydroxyl groups of the polyester polyol is, for example, 4 or less, preferably 3 or less, more preferably 2.5 or less.

The macropolyol can contain other macropolyols as optional components. Other macropolyols are macropolyols except polyester polyol.

Examples of other macropolyols include polyether polyol, polycarbonate polyol, polyurethane polyol, epoxy polyol, vegetable oil polyol, polyolefin polyol, acrylic polyol, and vinyl monomer-modified polyol. These can be used alone or in combination of two or more.

The content ratio of other macropolyols is, for example, 50% by mass or less, preferably 30% by mass or less, more preferably 10% by mass or less, particularly preferably 0% by mass relative to the total amount of the macropolyol. The content ratio of the polyester polyol is, for example, 50% by mass or more, preferably 70% by mass or more, more preferably 90% by mass or more, particularly preferably 100% by mass relative to the total amount of the macropolyol. That is, the macropolyol particularly preferably consists of a polyester polyol.

The macropolyol has a number average molecular weight of, for example, 400 or more, preferably 500 or more, in view of gas barrier properties and initial tack. The number average molecular weight of the macropolyol is, for example, 20000 or less, preferably 10000 or less, more preferably 5000 or less, further preferably 2000 or less, further preferably 1000 or less, particularly preferably 800 or less.

The macropolyol has an average number of hydroxyl groups of, for example, 1.8 or more, preferably 2 or more. Further, the average number of hydroxyl groups of the macropolyol is, for example, 4 or less, preferably 3 or less, more preferably 2.5 or less.

The low molecular weight polyol is an organic compound having two or more hydroxy groups in a molecule and having a relatively low molecular weight. The term "relatively low molecular weight" means that the molecular weight is less than 400. That is, the low molecular weight polyol has a molecular weight of less than 400, preferably 300 or less, more preferably 150 or less. The molecular weight of the low molecular weight polyol is usually 40 or more.

In order to contain a specific skeleton (structural formula (A)) to be described later in the isocyanate group-terminated prepolymer to achieve excellent gas barrier properties and adhesive strength, the low molecular weight polyol contains a low molecular weight diol as an essential component. That is, the polyol component as a raw material of the isocyanate group-terminated prepolymer contains a low molecular weight diol as the low molecular weight polyol.

The low molecular weight polyol preferably consists of a low molecular weight diol. Examples of the low molecular weight diol include dihydric alcohols. Examples of the dihydric alcohol include ethylene glycol, propylene glycol, 1,3-propanediol, 1,2-butanediol, 1,3-butanediol, 1,4-butanediol, 1,5-pentanediol, 1,6-hexanediol, neopentyl glycol, diethylene glycol, triethylene glycol, and dipropylene glycol. For the dihydric alcohol, polymerization products obtained by addition polymerization of alkylene oxide with dihydric alcohols so as to have a number average molecular weight of 400 or less may be used.

These low molecular weight diols can be used alone or in combination of two or more. The low molecular weight diol preferably contains ethylene glycol, propylene glycol, diethylene glycol, and/or dipropylene glycol, more preferably contains ethylene glycol, diethylene glycol, and/or propylene glycol, further preferably consists of ethylene glycol, diethylene glycol, and/or propylene glycol, and particularly preferably consists of ethylene glycol and diethylene glycol.

The low molecular weight polyol can contain a low molecular weight polyol having a functionality of three or more as an optional component. Examples of the low molecular weight polyol having a functionality of three or more include trihydric alcohols, and tetra- or higher hydric alcohols. Examples of the trihydric alcohol include glycerin and trimethylolpropane. For the trihydric alcohol, polymerization products obtained by addition polymerization of alkylene oxide with trihydric alcohols so as to have a number average molecular weight of 400 or less may be used. Examples of the tetra- or higher hydric alcohol include diglycerol, pentaerythritol, and dipentaerythritol. These can be used alone or in combination of two or more.

The content ratio of the low molecular weight polyol having a functionality of three or more is, for example, 50% by mass or less, preferably 30% by mass or less, more preferably 10% by mass or less, particularly preferably 0% by mass relative to the total amount of the low molecular weight polyol. The content ratio of the low molecular weight diol is, for example, 50% by mass or more, preferably 70% by mass or more, more preferably 90% by mass or more, particularly preferably 100% by mass relative to the total amount of the low molecular weight polyol. That is, the low molecular weight polyol particularly preferably consists of a low molecular weight diol.

In the polyol component, the content ratio of the macropolyol, and the content ratio of the low molecular weight polyol are appropriately set so that the ratio of the specific skeleton (structural formula (A)) to be described later in the isocyanate group-terminated prepolymer is within a predetermined range.

For example, the macropolyol is contained in an amount of, for example, 50% by mass or more, preferably 60% by mass or more relative to the total amount of the polyol component. The macropolyol is contained in an amount of, for example, 90% by mass or less, preferably 80% by mass or less. The low molecular weight polyol is contained in an amount of, for example, 10% by mass or more, preferably 20% by mass or more. The low molecular weight polyol is contained in an amount of, for example, 50% by mass or less, preferably 40% by mass or less.

The isocyanate group-terminated prepolymer is produced by subjecting the polyisocyanate component to a urethane-forming reaction with the polyol component at a predetermined equivalent ratio.

To be more specific, an equivalent ratio (NCO/OH) of the isocyanate group in the polyisocyanate component to the hydroxy group in the polyol component exceeds 1, and is, for example, 1.1 or more, preferably 1.5 or more, further preferably 2.0 or more, and for example, 15.0 or less, preferably 10.0 or less, further preferably 8.0 or less.

In the urethane-forming reaction, the reaction temperature is, for example, 20°C or more, preferably 50°C or more, and for example, 150°C or less, preferably 120°C or less. The reaction time is 0.5 hours or more, preferably 1 hour or more, and for example, 18 hours or less, preferably 10 hours or less.

In the urethane-forming reaction, as necessary, an organic solvent can be blended. Examples of the organic solvent include ketones, nitriles, alkyl esters, aliphatic hydrocarbons, alicyclic hydrocarbons, aromatic hydrocarbons, ethers, glycol ether esters, halogenated aliphatic hydrocarbons, and polar aprotic solvents. These can be used alone or in combination of two or more. The blending amount of the organic solvent is appropriately set in accordance with its purpose and use.

In the above-described polymerization reaction, as necessary, a urethanizing catalyst can be blended. Examples of the urethanizing catalyst include amines, organic metallic compounds, and potassium salts.

These can be used alone or in combination of two or more. The blending amount of the urethanizing catalyst is appropriately set in accordance with its purpose and use.

The above-described components are then allowed to react until the isocyanate group content reaches a predetermined value. In this manner, the isocyanate group-terminated prepolymer is produced.

The isocyanate group content in the isocyanate group-terminated prepolymer is, for example, 5.0% by mass or more, more preferably 10.0% by mass or more, more preferably 15.0% by mass or more, and for example, 30.0% by mass or less, preferably 25.0% by mass or less. The isocyanate group content can be determined by titration with di-n-butylamine and FT-IR analysis.

After the above-described reaction, an unreacted polyisocyanate component can be removed by a known removing method. Examples of the removing method include distillation and extraction.

The isocyanate group-terminated prepolymer can be prepared as a solution of the above-described organic solvent. In such a case, the solids concentration of the solution is appropriately set in accordance with its purpose and use. As necessary, the organic solvent may be removed by the above-described removing method.

In the above-described method, when the polyisocyanate component that is the raw material of the isocyanate group-terminated prepolymer contains xylylene diisocyanate and the polyol component that is the raw material of the isocyanate group-terminated prepolymer contains dihydric alcohol, the isocyanate group-terminated prepolymer has a urethane skeleton formed by the xylylene diisocyanate and the dihydric alcohol. To be more specific, the isocyanate group-terminated prepolymer has a skeleton represented by the following structural formula (A). 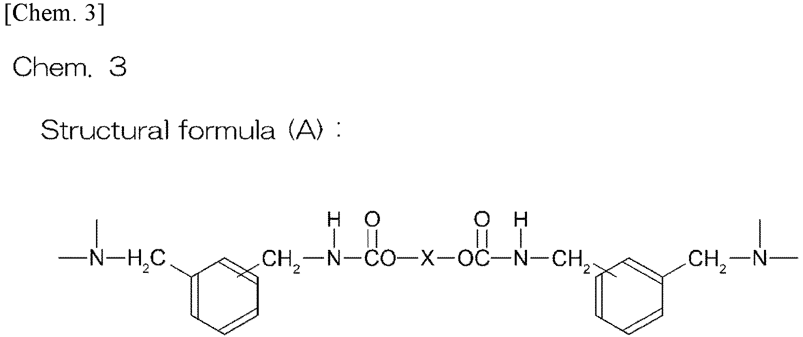 (where X represents a low molecular weight diol residue.)

In the structural formula (A), X represents a low molecular weight diol residue. To be more specific, X contains a low molecular weight diol residue contained in the low molecular weight polyol as a raw material of the isocyanate group-terminated prepolymer. Preferably, the above-described isocyanate group-terminated prepolymer contains the skeleton represented by the structural formula (A) at a ratio of a predetermined amount or more.

To be more specific, the content ratio of the skeleton represented by the structural formula (A) is, relative to the total amount of the isocyanate group-terminated prepolymer, 40% by mass or more, and in view of gas barrier properties, preferably 45% by mass or more, more preferably 50% by mass or more. The content ratio of the skeleton represented by the structural formula (A) is, relative to the total amount of the isocyanate group-terminated prepolymer, for example, 80% by mass or less, preferably 70% by mass or less, in view of initial tack and adherence.

The content ratio of the skeleton represented by the structural formula (A) can be calculated based on the charged amount of the raw material of the above-described isocyanate group-terminated prepolymer and yield.

When the content ratio of the skeleton represented by the above-described structural formula (A) in the isocyanate group-terminated prepolymer is the predetermined amount or more, an adhesive having excellent gas barrier properties and adherence and also having excellent initial tack can be produced.

To be more specific, examples of the adhesive include a moisture-curable type adhesive (hereinafter referred to as "moisture-curable adhesive") and a two-component curable type adhesive (hereinafter referred to as "two-component curable adhesive").

When the adhesive is a moisture-curable adhesive (one-component curable adhesive), the adhesive consists of only one agent (one component) containing an isocyanate group-terminated prepolymer.

To be more specific, the moisture-curable adhesive contains, as an essential component, the isocyanate group-terminated prepolymer having the skeleton represented by the above-described structural formula (A).

The moisture-curable adhesive can contain an additive as an optional component. Examples of the additive include phosphoric acid, a phosphoric acid derivative, a silane coupling agent, an antifoaming agent, an epoxy resin, a catalyst, a coating improver, a leveling agent, an antioxidant, an ultraviolet absorber, a plasticizer, a surfactant, a pigment, a filler, organic fine particles, inorganic fine particles, and an antifungal agent. The blending ratio of the additive is appropriately determined in accordance with its purpose and use.

Further, the moisture-curable adhesive can contain the above-described organic solvent as an optional component. That is, the moisture-curable adhesive may be a solvent-based adhesive. The blending ratio of the organic solvent is appropriately set in accordance with its purpose and use. The moisture-curable adhesive may not contain the organic solvent. That is, the moisture-curable adhesive may be a solvent-free adhesive.

The moisture-curable adhesive is cured, for example, by moisture. That is, the moisture-curable adhesive is cured by allowing the isocyanate group at the molecular terminal of the isocyanate group-terminated prepolymer to react with moisture. Examples of the moisture includes water in the atmosphere and amine vapor.

Such moisture-curable adhesive contains the isocyanate group-terminated prepolymer having the skeleton represented by the above-described structural formula (A). Therefore, a cured product obtained by curing the moisture-curable adhesive by moisture has the skeleton represented by the above-described structural formula (A).

The content ratio of the skeleton represented by the structural formula (A) is, relative to the total amount of the cured product of the moisture-curable adhesive, for example, 40% by mass or more, and in view of gas barrier properties, preferably 45% by mass or more, more preferably 50% by mass or more. The content ratio of the skeleton represented by the structural formula (A) is, relative to the total amount of the cured product of the moisture-curable adhesive, for example, 80% by mass or less, preferably 70% by mass or less, in view of initial tack and adherence.

The content ratio of the skeleton represented by the structural formula (A) can be calculated based on the charged amount of the raw material of the above-described moisture-curable adhesive and yield.

In such moisture-curable adhesive, the isocyanate group-terminated prepolymer contains the reaction product of the polyisocyanate component containing xylylene diisocyanate and the polyol component containing the polyester polyol and the low molecular weight diol, and the skeleton represented by the structural formula (A) is contained in the isocyanate group-terminated prepolymer at a ratio of the predetermined amount or more. Therefore, the moisture-curable adhesive is excellent in initial tack, gas barrier properties, and adherence. In particular, the above-described moisture-curable adhesive can exhibit excellent gas barrier properties by adhering to an inorganic thin film to be described later.

When the adhesive is the two-component curable adhesive, the adhesive is a resin kit independently including a first component and a second component. The first and second components are prepared as a set and blended when used.

In the two-component curable adhesive, the first component contains the above-described isocyanate group-terminated prepolymer as an essential component. The content ratio of the isocyanate group-terminated prepolymer is, for example, 80% by mass or more, preferably 90% by mass or more relative to the total amount of the first component. The first component can contain an additive and an organic solvent as necessary. In other words, the first component preferably consists of the above-described isocyanate group-terminated prepolymer, an additive to be blended as needed, and an organic solvent to be blended as needed.

In the two-component curable adhesive, the second component contains, for example, the above-described low molecular weight polyol, preferably the above-described low molecular weight diol.

In the second component, the low molecular weight diol preferably contains ethylene glycol, propylene glycol, and/or dipropylene glycol, more preferably contains ethylene glycol and/or propylene glycol, further preferably consists of ethylene glycol and/or propylene glycol, and particularly preferably consists of ethylene glycol.

The low molecular weight diol in the second component may be different in type from the low molecular weight diol contained in the isocyanate group-terminated prepolymer, or may be the same. That is, the low molecular weight diol in the second component and the low molecular weight diol as the raw material of the isocyanate group-terminated prepolymer may contain the same or different types of dihydric alcohol. Preferably, the low molecular weight diol in the second component and the low molecular weight diol as the raw material of the isocyanate group-terminated prepolymer each contain the same type of dihydric alcohol, and more preferably each consist of the same type of dihydric alcohol.

The second component may further contain the above-described low molecular weight polyol having a functionality of three or more. Preferably, the second component does not contain a low molecular weight polyol having a functionality of three or more. The second component may further contain the above-described macropolyol. Examples of the macropolyol include polyester polyol, polyether polyol, polycarbonate polyol, polyurethane polyol, epoxy polyol, vegetable oil polyol, polyolefin polyol, acrylic polyol, and vinyl monomer modified polyol. Preferably, the second component does not contain a macropolyol.

The second component can contain an additive and an organic solvent as necessary. In other words, the second component preferably consists of the above-described low molecular weight diol, an additive to be blended as needed, and an organic solvent to be blended as needed.

The two-component curable adhesive can contain the above-described additive as an optional component. The additive may be added to the first component, to the second component, or to both the first and second components. The blending ratio of the additive is appropriately determined in accordance with its purpose and use.

Further, the two-component curable adhesive can contain the above-described organic solvent as an optional component. The organic solvent may be contained in the first component, in the second component, or in both the first and second components. When the first component not containing the organic solvent is mixed with the second component not containing the organic solvent, the first component and/or the second component can be dissolved in the organic solvent. That is, the two-component curable adhesive may be a solvent-based adhesive. The blending ratio of the organic solvent is appropriately set in accordance with its purpose and use. The two-component curable adhesive may not contain the organic solvent. That is, the two-component curable adhesive may be a solvent-free adhesive.

The two-component curable adhesive is cured by mixing the first component and the second component to thereby allow the isocyanate group at the molecular terminal of the isocyanate group-terminated prepolymer in the first component to react with the hydroxy group of the low molecular weight polyol in the second component.

At the time of use of the two-component curable adhesive, the blending ratio of the first and second components is appropriately set in accordance with its purpose and use. For example, an equivalent ratio R (NCO/OH) of the isocyanate group of the isocyanate group-terminated prepolymer in the first component to the hydroxy group of the low molecular weight polyol in the two component is, for example, 0.5 or more, preferably 0.8 or more. The equivalent ratio R (NCO/OH) of the isocyanate group of the isocyanate group-terminated prepolymer in the first component to the hydroxy group of the low molecular weight polyol in the two component is, for example, 5 or less, preferably 2 or less, more preferably 1.5 or less, further preferably 1.2 or less.

The two-component curable adhesive contains the above-described isocyanate group-terminated prepolymer in the first component. Therefore, a cured product obtained by mixing the first and second components to thereby cure the two-component curable adhesive has the skeleton represented by the above-described structural formula (A). Furthermore, when the second component contains a low molecular weight diol, the skeleton represented by the structural formula (A) can be formed by a reaction of the first and second components. Therefore, the cured product obtained by curing the two-component curable adhesive can contain, as the skeleton represented by the structural formula (A), the skeleton formed by the reaction of the first and second components, in addition to the skeleton contained in the above-described isocyanate group-terminated prepolymer.

The content ratio of the skeleton represented by the structural formula (A) is, relative to the total amount of the cured product of the two-component curable adhesive, for example, 50% by mass or more, and in view of gas barrier properties, preferably 55% by mass or more, more preferably 60% by mass or more. The content ratio of the skeleton represented by the structural formula (A) is, relative to the total amount of the cured product of the two-component curable adhesive, for example, 80% by mass or less, preferably 70% by mass or less, in view of initial tack and adherence.

The content ratio of the skeleton represented by the structural formula (A) can be calculated based on the charged amount of the raw material of the above-described two-component curable adhesive and yield, and the blending ratio of the first and second components.

In such two-component curable adhesive, the isocyanate group-terminated prepolymer contains the reaction product of the polyisocyanate component containing xylylene diisocyanate and the polyol component containing the polyester polyol and the low molecular weight diol, and the skeleton represented by the structural formula (A) is contained in the isocyanate group-terminated prepolymer at a ratio of the predetermined amount or more. Therefore, the two-component curable adhesive is excellent in initial tack, gas barrier properties, and adherence. In particular, the above-described two-component curable adhesive can exhibit excellent gas barrier properties by adhering to an inorganic thin film to be described later.

When the content ratio of the skeleton represented by the structural formula (A) relative to the total amount of the cured product of the two-component curable adhesive is within the above-described range, the content ratio of the skeleton represented by the structural formula (A) of the isocyanate group-terminated prepolymer in the first component may be less than 40% by mass.

Such adhesive also contains the skeleton represented by the above-described structural formula (A) at a ratio of the predetermined value or more relative to the total amount of the cured product of the two-component curable adhesive. Therefore, the adhesive of the present invention has excellent gas barrier properties and adherence.

The above-described adhesives (moisture-curable adhesive and two-component curable adhesive) are suitably used in the production of a laminate.

In FIG. 1, a laminated film 1 as the laminate includes a substrate 2, an adhesive layer 3 disposed on the substrate 2, an inorganic thin film 4 disposed on the adhesive layer 3, and a film 5 disposed on the inorganic thin film 4.

Examples of the substrate 2 include resin films and paper substrates having a resin layer. In the resin film, examples of the resin include olefin-based polymer, polyester-based polymer, polyamide-based polymer, and vinyl-based polymer. Examples of the olefin-based polymer include polyethylene and polypropylene. Examples of the polyester-based polymer include polyalkylene terephthalate and polyalkylene naphthalate. Examples of the polyamide-based polymer include nylon 6 and nylon 66. Examples of the vinyl-based polymer include polyvinyl chloride, ethylene-vinyl acetate copolymer, and ethylene-vinyl alcohol copolymer. The paper substrate having a resin layer includes, for example, a paper substrate, and a resin layer formed on at least one surface of the paper substrate. The resin layer is formed of, for example, a coating resin. Examples of the coating resin include styrene-butadiene copolymer, acrylic polymer, and styrene-acryl copolymer. These can be used alone or in combination of two or more. Preferably, a resin film is used.

The resin film may be subjected to surface treatment as needed. Examples of the surface treatment include corona discharge treatment and primer treatment.

The resin film may be an unoriented film or an oriented film. Examples of the oriented film include a machine-direction-oriented film and a biaxially-oriented film. The resin film may be a monolayer film or a multilayer film.

The thickness of the substrate 2 is not particularly limited and is, for example, 5 µm or more, preferably 10 µm or more. The thickness of the substrate 2 is, for example, 200 µm or less, preferably 100 µm or less.

The adhesive layer 3 is a cured product of the above-described adhesive. The adhesive layer 3 is disposed between the substrate 2 and the inorganic thin film 4 and adheres the substrate 2 and the inorganic thin film 4. The adhesive layer 3 exhibits gas barrier properties by adhering to the inorganic thin film 4. When the substrate 2 is a paper substrate having a resin layer, the adhesive layer 3 is disposed on the resin layer.

As the details are described later, this adhesive layer 3 is produced by applying the above-described adhesive (moisture-curable adhesive and/or two-component curable adhesive) to the substrate 2, laminating the inorganic thin film 4 (composite film 6) on the coated film, and then curing the adhesive.

The thickness of the adhesive layer 3 is not particularly limited and is, for example, 5 µm or more, preferably 10 µm or more. The thickness of the adhesive layer 3 is, for example, 200 µm or less, preferably 100 µm or less.

The inorganic thin film 4 is a thin film of inorganic material. Examples of the inorganic material include metal and metal oxide. Examples of the metal include magnesium, calcium, barium, titanium, zirconium, aluminum, indium, silicon, germanium, and tin. Examples of the metal oxide include magnesium oxide, titanium oxide, aluminum oxide, indium oxide, silicon oxide, tin oxide, and silicon oxide nitride. These can be used alone or in combination of two or more. In view of gas barrier properties and production efficiency, preferably, aluminum, silicon, and their oxides are used.

The thickness of the inorganic thin film 4 is not particularly limited and is, for example, 1 nm or more, preferably 2 nm or more. The thickness of the inorganic thin film 4 is, for example, 500 nm or less, preferably 300 nm or less.

The film 5 is a plastic film prepared separately from the substrate 2. An example of the film 5 include the above-described resin film as the substrate 2.

The thickness of the film 5 is not particularly limited and is, for example, 5 µm or more, preferably 10 µm or more. The thickness of the film 5 is, for example, 200 µm or less, preferably 100 µm or less.

The inorganic thin film 4 and the film 5 are preferably formed as a composite film 6. That is, the inorganic thin film 4 is preferably formed on the film 5. In this manner, the composite film 6 including the inorganic thin film 4 and the film 5 is produced. Examples of a method of forming the inorganic thin film 4 include vapor deposition (vacuum deposition, EB-PVD, etc.), sputtering, ion plating, lamination, and plasma enhanced vapor deposition (CVD). In view of production efficiency, preferably, vacuum deposition is used.

To produce such laminated film 1, for example, the substrate 2 and the composite film 6 are first prepared. Then, in this method, the above-described adhesive is applied to one surface in the thickness direction of the substrate 2. Examples of the application method include bar coating method, curtain coating method, roll coating method, and blade coating method. The application temperature of the solvent-based adhesive is, for example, room temperature. The application temperature of the solvent-free adhesive is, for example, 35°C or more, preferably 40°C or more. The application temperature of the solvent-free adhesive is, for example, 100°C or less, preferably 90°C or less. Both the application amount of the solvent-based adhesive and the application amount of the solvent-free adhesive are, for example, 0.5 g/m² or more, preferably 1.0 g/m² or more, more preferably 1.5 g/m² or more, in terms of solid content. These application amounts are, for example, 5 g/m² or less.

Next, the composite film 6 is laminated on the coated film of the adhesive. To be more specific, the inorganic thin film 4 of the composite film 6 is adhered to the coated film of the adhesive. When the adhesive contains an organic solvent, the organic solvent in the adhesive is volatilized at room temperature or under heating.

Thereafter, the coated film of the adhesive is cured at room temperature or under heating. The curing temperature is, for example, 20°C or more, preferably 30°C or more. Further, the curing temperature is, for example, 100°C or less, preferably 80°C or less. The curing time is, for example, 1 hour or more, preferably 5 hours or more. Further, the curing time is, for example, 7 days or less, preferably 5 days or less.

In this manner, the adhesive layer 3 composed of the cured product of the adhesive is formed between the substrate 2 and the inorganic thin film 4. As a result, the laminated film 1 is produced.

Such laminated film 1 includes the adhesive layer 3 that is the cured product of the above-described adhesive. The inorganic thin film 4 is disposed on the adhesive layer 3. Therefore, the above-described laminated film 1 is excellent in initial tack, gas barrier properties, and adherence of the adhesive layer 3.

In the above-described description, the laminated film 1 includes the film 5, but may not include the film 5. In such a case, the inorganic thin film 4 is formed as an independent thin film and is laminated on the coated film of the adhesive.

### Example

Next, the present invention is described with reference to Examples and Comparative Examples. The present invention is however not limited by the following Examples. The "parts" and "%" are based on mass unless otherwise specified. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF THE EMBODIMENTS".

### 1. Macropolyol

### Preparation Examples 1 to 3 (Polyester polyols A to C)

Polybasic acid and polyhydric alcohol were mixed according to the formulation listed in Table 1. The mixture was subjected to an esterification reaction at 160 to 220°C under nitrogen flow. A predetermined amount of condensation water was distilled off. In this manner, a polyester polyol was obtained. The number average molecular weight (in terms of polystyrene) of each of the polyester polyols was measured by gel permeation chromatography.

The results are shown in Table 1.

### Preparation Example 4 (Polyether polyol D)

Commercially available polytetramethylene ether glycol (trade name PTMEG-650, manufactured by Korea PTG Co., Ltd., number average molecular weight: 650) was prepared as polyether polyol D.

### 2. Isocyanate group-terminated prepolymer

### Synthesis Examples 1 to 8 and Comparative Synthesis Example 1 to 3

A polyisocyanate component was mixed with a low molecular weight polyol and a macropolyol according to the formulations listed in Tables 2 and 3. The mixture thereof was subjected to a urethane-forming reaction at 80°C under nitrogen flow. Then, it was confirmed that the amine equivalent of the reaction solution reached the predetermined value (see (before distillation) in Tables). Thereafter, the reaction solution was thin-film distilled to remove an unreacted polyisocyanate component. Thus, an isocyanate group-terminated prepolymer was produced. Tables 2 and 3 show the mass ratio (wt) of each of the raw materials and the amine equivalent (after distillation) of the isocyanate group-terminated prepolymer.

The content of the skeleton represented by the structural formula (A) (structural formula (A) content) in each of the isocyanate group-terminated prepolymers was calculated based on the charged amount of the raw materials and yield. The results are shown in Tables 2 and 3.

### 3. Two-component curable adhesive

### Examples 1 to 12 and Comparative Examples 1 to 3

An isocyanate group-terminated prepolymer was prepared as the first component according to the formulations listed in Tables 4 to 6. A low molecular weight polyol was prepared as the second component. In this manner, a two-component curable adhesive was prepared. The equivalent ratio (NCO/OH) of the isocyanate group in the first component to the hydroxy group in the second component was set to about 1.5.

In Example 1, acetone as an organic solvent was contained in the first component. In Examples 6, 8, 9 to 11 and Comparative Examples 1 to 3, ethyl acetate as the organic solvent was contained in the first component. That is, a solvent-based adhesive was prepared as the two-component curable adhesive.

In Examples 2 to 5, 7 and 12, no organic solvents were contained in the first and second components. That is, a solvent-free adhesive was prepared as the two-component curable adhesive.

### Comparative Examples 4 and 5

An ethyl acetate solution (solid content of 75% by mass) of a trimethylolpropane adduct of xylylene diisocyanate (XDI-TMP) was prepared as the first component according to the formulation listed in Table 7. A low molecular weight polyol was prepared as the second component. Further, in Comparative Example 7, ethanol was mixed with the second component. In this manner, a two-component curable adhesive was prepared.

### 4. Laminate (two-component curable adhesive)

A corona-treated biaxially oriented polypropylene film (trade name: PYLEN (registered trademark) Film OT P-2161, thickness: 20 µm, manufactured by TOYOBO CO., LTD., hereinafter referred to as OPP film) was prepared as a first substrate.

An aluminum-deposited unoriented polypropylene film (trade name: MLCP WS, thickness: 25 µm, manufactured by Mitsui Chemicals Tohcello, Inc., hereinafter referred to as VM-CPP film) was prepared as a second substrate.

The first and second components of the two-component curable adhesive were mixed. The two-component curable adhesive (mixture) was then applied to the corona-treated surface of the OPP film. The solvent-based adhesive was applied using a bar coater. The solvent-free adhesive was applied using a solvent-free laminator.

The application amount was a solid weight of 2.0 g/m².

Thereafter, the adhesive-applied surface of the OPP film and the aluminum-deposited surface of the VM-CPP film were bonded together to produce a laminate. The laminate was further aged at 40°C for 3 days.

### 5. Moisture-curable adhesive

### Examples 13 and 14

An isocyanate group-terminated prepolymer was prepared as the moisture-curable adhesive according to the formulation listed in Table 8.

In Example 13, ethyl acetate as the organic solvent was contained in the isocyanate group-terminated prepolymer. That is, a solvent-based adhesive was prepared as the moisture-curable adhesive.

In Example 14, no organic solvents were contained in the isocyanate group-terminated prepolymer. That is, a solvent-free adhesive was prepared as the moisture-curable adhesive.

### 6. Laminate (moisture-curable adhesive)

A corona-treated OPP film was prepared as the first substrate. A VM-CPP film was prepared as the second substrate. The moisture-curable adhesive was then applied to the corona-treated surface of the OPP film. The application amount was a solid weight of 2.0 g/m².

Thereafter, the adhesive-applied surface of the OPP film and the aluminum-deposited surface of the VM-CPP film were bonded together to produce a laminate. The laminate was further aged at 40°C for 3 days.

### 7. Evaluation

### (1) Oxygen transmittance

The oxygen transmission amount of the laminate was measured using an oxygen transmission measuring device (OX-TRAN2/20, manufactured by MOCON, Inc.). The measurement temperature was 20°C and the relative humidity was 80% (80% RH). The unit was cc/m² - 24 hrs·1 atm.

### (2) Initial tack (initial adhesion)

The OPP film and the VM-CPP film were peeled off by hand immediately after the OPP film and the VM-CPP film were bonded together. In this manner, tack (initial tack) of the adhesive-applied surface was evaluated. The evaluation criteria are shown below.
Excellent: Tack was clearly observed.
Good: Tack was slightly observed.
Bad: No tack was observed.

### (3) Adhesive strength

The adhesive strength of the laminate was measured by a T-peel test in accordance with JIS K 6854 (1999).

### [Table 1]

**TABLE 1**

| No. | | Preparation Example 1 | Preparation Example 2 | Preparation Example 3 |
|---|---|---|---|---|
| | | Polyester polyol A | Polyester polyol B | Polyester polyol C |
| Blending formulation (parts by mass) | Isophthalic acid | 288 | 778 | 294 |
| | Adipic acid | 254 | 684 | 129 |
| | Sebacic acid | - | - | 179 |
| | Ethylene glycol | - | 246 | - |
| | Diethylene glycol | 438 | 899 | - |
| | 1,3-Butanediol | - | - | 376 |
| | Neopentyl glycol | - | - | 220 |
| Number average molecular weight | | 1600 | 1000 | 500 |

### [Table 2]

**TABLE 2**

| No. | | Syn. Ex. 1 | Syn. Ex. 2 | Syn. Ex. 3 | Syn. Ex. 4 | Syn. Ex. 5 | Syn. Ex. 6 | Syn. Ex. 7 | Syn. Ex. 8 |
|---|---|---|---|---|---|---|---|---|---|
| Blending formulation | | wt | wt | wt | wt | wt | wt | wt | wt |
| Polyisocyanate component | XDI | 781 | 790 | 813 | 820 | 848 | 834 | 1613 | 763 |
| Low molecular weight polyol | EG | 45 | 42 | 37 | 36 | 30 | - | 39 | 24 |
| | PG | - | - | 9 | - | 18 | 50 | - | - |
| | DEG | - | - | - | - | - | - | 78 | - |
| Macropolyol | Polyester polyol A | 178 | - | - | - | - | - | - | - |
| | Polyester polyol B | - | 167 | 140 | - | - | - | - | - |
| | Polyester polyol C | - | - | - | 145 | 107 | 116 | 273 | 214 |
| | Polyester polyol D | - | - | - | - | - | - | - | - |
| Amine equivalent | (Before distillation) | 151 | 149 | 145 | 144 | 141 | 141 | - | - |
| | (After distillation) | 403 | 382 | 373 | 347 | 328 | 337 | 347 | 397 |
| Structural formula (A) content | (mass%) | 55% | 52% | 54% | 46% | 60% | 55% | 53% | 28% |

### [Table 3]

**TABLE 3**

| No. | | Comp. Syn. Ex. 1 | Comp. Syn. Ex. 2 | Comp. Syn. Ex. 3 |
|---|---|---|---|---|
| Blending formulation | | wt | wt | wt |
| Polyisocyanate component | XDI | 569 | 672 | 841 |
| Low molecular weight polyol | EG | 22 | 33 | 32 |
| | PG | - | - | 16 |
| | DEG | - | - | - |
| Macropolyol | Polyester polyol A | 410 | 298 | - |
| | Polyester polyol B | - | - | - |
| | Polyester polyol C | - | - | - |
| | Polyester polyol D | - | - | 112 |
| Amine equivalent | (Before distillation) | 207 | 176 | 140 |
| | (After distillation) | 649 | 514 | 321 |
| Structural formula (A) content | (mass%) | 21% | 35%; | 59%; |

### [Table 4]

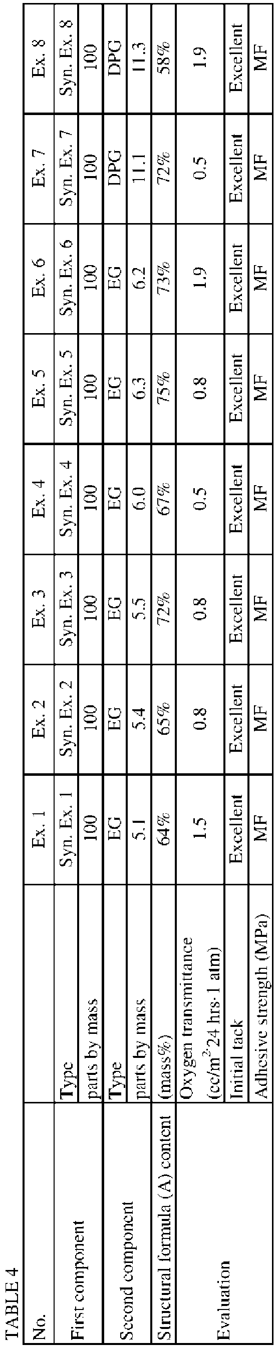

### [Table 5]

**TABLE 5**

| No. | | Comp. Ex. 1 | Comp. Ex. 2 | Comp. Ex. 3 |
|---|---|---|---|---|
| First component | Type | Comp. Syn. Ex. 1 | Comp. Syn. Ex. 2 | Comp. Syn. Ex. 3 |
| | parts by mass | 100 | 100 | 100 |
| Second component | parts by mass | EG | EG | EG |
| Second component | parts by mass | 3.2 | 4.0 | 6.4 |
| Structural formula (A) content | (mass%) | 3 6% | 48% | 74% |
| Evaluation | Oxygen transmittance (cc/m² 24 hrs·1 atm) | 9.6 | 5.4 | 7.8 |
| | Initial tack | Excellent | Excellent | Good |
| | Adhesive strength (MPa) | MF | MF | 0.3 |

### [Table 6]

**TABLE 6**

| No. | | Ex. 9 | Ex. 10 | Ex. 11 | Ex. 12 |
|---|---|---|---|---|---|
| First component | Type | Syn. Ex. 4 | Syn. Ex. 5 | Syn. Ex. 6 | Syn. Ex. 5 |
| | parts by mass | 100 | 100 | 100 | 100 |
| Second component | Type | PG | PG | PG | DPG |
| | parts by mass | 7.3 | 7.8 | 7.5 | 13.6 |
| Structural formula (A) content | (mass%) | 68% | 75% | 73% | 76% |
| Evaluation | Oxygen transmittance (cc/m²24 hrs· 1 atm) | 1.8 | 1.6 | 1.5 | 1.5 |
| | Initial tack | Excellent | Excellent | Excellent | Excellent |
| | Adhesive strength (MPa) | MF | MF | MF | MF |

### [Table 7]

**TABLE 7**

| No. | | Comp. Ex. 4 | Comp. Ex. 5 |
|---|---|---|---|
| First component | Type | XDI-TMP | XDI-TMP |
| | parts by mass | 266 | 27.2 |
| Second component | Type | EG | EG |
| | parts by mass | 31 | 2.8 |
| | Type | EtOH | - |
| | parts by mass | 46.07 | - |
| Structural formula (A) content | (mass%) | 31% | 58% |
| Evaluation | Oxygen transmittance (cc/m^{2·}24 hrs· 1 atm) | 0.6 | 0.4 |
| | Initial tack | Bad | Bad |
| | Adhesive strength (MPa) | MF | MF |

### [Table 8]

**TABLE 8**

| No. | | Ex. 13 | Ex. 14 |
|---|---|---|---|
| Isocyanate group-terminated prepolymer | Type | Syn. Ex. 4 | Syn. Ex. 5 |
| | parts by mass | 100 | 100 |
| Structural formula (A) content | (mass%) | 47% | 58% |
| Evaluation | Oxygen transmittance (cc/m²24 hrs·1 atm) | 1.4 | 1.0 |
| | Initial tack | Excellent | Excellent |
| | Adhesive strength (MPa) | MF | MF |

The details of the abbreviations in Tables are given in the following.
XDI: Xylylene diisocyanate
XDI-TMP: Ethyl acetate solution of trimethylolpropane adduct of xylylene diisocyanate (solid content of 75% by mass)
EG: Ethylene glycol
PG: Propylene glycol
DEG: Diethylene glycol
DPG: Dipropylene glycol
MF: Material fracture (OPP film cut, surface peeling of OPP film, transferring of VM-CPP inorganic thin film)

### Description of Reference Numerals

- 1: laminated film
- 2: substrate
- 3: adhesive layer
- 4: inorganic thin film
- 5: film
- 6: composite film

## Claims

1. An adhesive comprising an isocyanate group-terminated prepolymer,
the isocyanate group-terminated prepolymer comprising a reaction product of
a polyisocyanate component containing xylylene diisocyanate and
a polyol component containing a polyester polyol and a low molecular weight diol,
wherein the isocyanate group-terminated prepolymer has a skeleton represented by a structural formula (A), and
a content ratio of the skeleton represented by the structural formula (A) is 40% by mass or more relative to a total amount of the isocyanate group-terminated prepolymer. 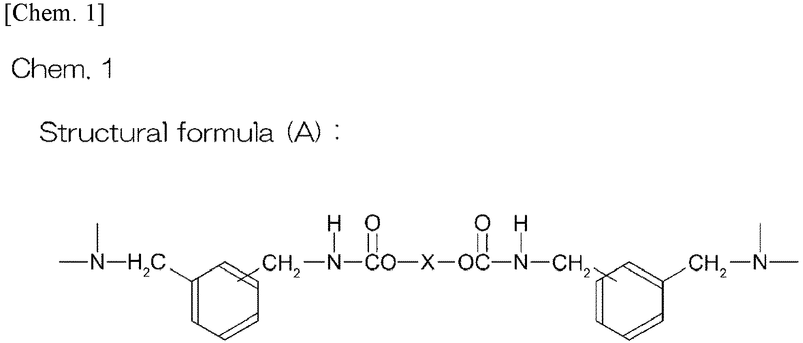 (where X represents a low molecular weight diol residue.)

2. The adhesive according to claim 1, wherein the low molecular weight diol comprises ethylene glycol and/or propylene glycol.

3. The adhesive according to claim 1, wherein the polyester polyol has a number average molecular weight of 400 or more and 2000 or less.

4. The adhesive according to claim 1, being a moisture-curable adhesive.

5. The adhesive according to claim 1, being a two-component curable adhesive,
the adhesive comprising
a first component containing the isocyanate group-terminated prepolymer and
a second component containing a low molecular weight polyol.

6. The adhesive according to claim 5, wherein the content ratio of the skeleton represented by the structural formula (A) is 50% by mass or more relative to a total amount of a cured product of the two-component curable adhesive.

7. A laminate comprising:
a substrate;
an adhesive layer disposed on the substrate; and
an inorganic thin film disposed on the adhesive layer,
wherein the adhesive layer is a cured product of the adhesive according to claim 1.

8. The adhesive according to claim 1, being a two-component curable adhesive,
the adhesive comprising
a first component containing an isocyanate group-terminated prepolymer and
a second component containing a low molecular weight polyol,
the isocyanate group-terminated prepolymer comprising a reaction product of
a polyisocyanate component containing xylylene diisocyanate and
a polyol component containing a polyester polyol and a low molecular weight diol,
wherein the isocyanate group-terminated prepolymer has a skeleton represented by a structural formula (A), and
a content ratio of the skeleton represented by the structural formula (A) is 50% by mass or more relative to a total amount of a cured product of the two-component curable adhesive. 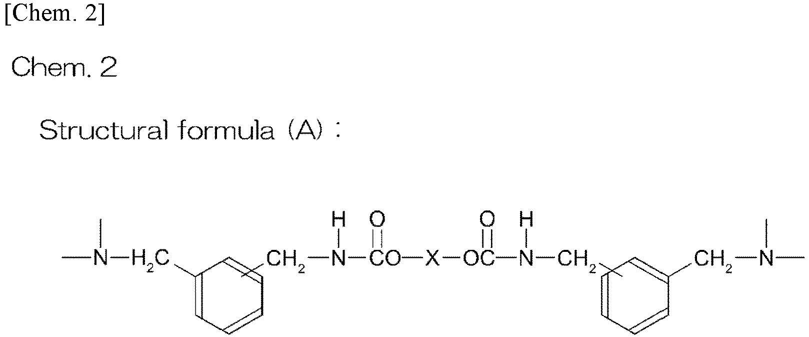 (where X represents a low molecular weight diol residue.)
